# EUROPÄISCHE PATENTSCHRIFT

(11) **EP 1 508 212 B1**
(45) Veröffentlichungstag und Bekanntmachung des Hinweises auf die Patenterteilung: **20.08.2008**
(21) Anmeldenummer: 03732451.4
(22) Anmeldetag: 23.05.2003
(51) Int. Cl.: H04J 3/22, H04J 14/00

(54) **VERFAHREN UND VORRICHTUNG ZUR OPTISCHEN DATEN BERTRAGUNG**
METHOD AND DEVICE FOR OPTICAL DATA TRANSMISSION
PROCEDE ET DISPOSITIF DE TRANSMISSION OPTIQUE DE DONNEES

(30) Priorität: 25.05.2002 DE 10223376
(43) Veröffentlichungstag der Anmeldung: 23.02.2005
(73) Patentinhaber: Efkon AG, 8045 Graz (AT)
(72) Erfinder: PAMMER, Raimund, 8503 St. Josef (AT); BOH, Wolfgang, A-8045 Graz (AT); SCHALK, Andreas, A-8045 Graz (AT); RIEDER, Helmut, 8045 Graz (AT)
(74) Vertreter: Reitstötter - Kinzebach
(86) Internationale Anmeldenummer: PCT/EP2003/005425
(87) Internationale Veröffentlichungsnummer: WO 2003/101019

(56) Entgegenhaltungen:
- WO-A-99/26364
- US-A- 5 278 689

## Beschreibung

Die vorliegende Erfindung betrifft ein Verfahren und eine Vorrichtung zur optischen Datenübertragung, insbesondere ein Verfahren zum Übertragen von Daten über wenigstens eine optische Übertragungsstrecke, wobei man Datensequenzen über ein Zeitvielfachzugriffsprotokoll innerhalb von, aus einzelnen sequentiellen Fenstern bestehenden Kommunikationsrahmen mit einer vorgegebenen minimalen Bitübertragungsrate überträgt, und man innerhalb jedes Kommunikationsrahmens wenigstens eine Steuerimpulssequenz vorsieht. Die Erfindung betrifft vor allem ein Verfahren zur drahtlosen optischen Datenübertragung mittels digitalisierter Infrarotsignale.

Moderne drahtlose Datenübertragungssysteme nützen heutzutage meist digitale Technologien, die insbesondere durch die immer populärer werdenden Mobilfunksysteme in den letzten Jahren einen starken Entwicklungsschub erlebt haben. Bei Radiofrequenz- und Mikrowellenübertragungssystemen hat sich die digitale Technologie insbesondere deshalb durchgesetzt, weil die zur Verfügung stehende Bandbreite bei höherer Datenübertragungsqualität, d.h. im Mobilfunkbereich insbesondere bei höhere Sprachqualität, über größere Entfernungen bei geringerer mittlerer Übertragungsleistung besser genutzt werden kann. Soll eine Datenübertragungsstrecke von mehreren Teilnehmern genutzt werden, so konkurrieren die Teilnehmer um die Nutzung dieser Übertragungsstrecke. Ohne weitere Regelung des Zugriffs vieler Teilnehmer kann es daher zu Kollisionen kommen, die für eine sichere und zuverlässige Übertragung äußerst unerwünscht sind. Zur Regelung des Zugriffs auf die physikalischen Ressourcen eines Übertragungssystems, also beispielsweise auf einen einzelnen Übertragungskanal, wurden spezielle Vielfachzugriffsverfahren entwickelt, die man auch als Medium Access Control (MAC) bezeichnet. Im Radiofrequenzbereich haben sich zwei dominierende Systeme etabliert, die regeln, wie eine Anzahl Teilnehmer störungsfreien Zugang zu einem einzelnen Übertragungskanal erhalten. Zum einen handelt es sich dabei um den sogenannten Codevielfachzugriff (Code Division Multiple Access, CDMA) und zum anderen um den Zeitvielfachzugriff (Time Division Multiple Access, TDMA). Das TDMA-Verfahren ist insbesondere durch seine Implementierung im europäischen GSM-Mobilfunkstandard bekannt.

In letzter Zeit haben auch optische Übertragungssysteme, insbesondere Infrarotübertragungssysteme zunehmend an Bedeutung gewonnen. Sie zeichnen sich durch einfache und kostengünstige Schaltungen aus, unterliegen keiner staatlichen Reglementierung und zeigen aufgrund ihrer geringen Wellenlänge kein sog. Rayleigh-Fading.

Für drahtlose Infrarotübertragungssysteme hat sich das TDMA-Verfahren zur Regelung des Vielfachzugriffs durch mehrere Teilnehmer durchgesetzt. Dabei werden jedem Nutzer eines einzelnen Kanals eindeutige Zeitabschnitte oder Zeitschlitze, sog. Fenster (Windows), zugeordnet. Gemäß TDMA-Protokoll sind die zu übertragenden Datensequenzen oder Datenbursts innerhalb von aus einzelnen sequenziellen, d.h. zeitlich aufeinanderfolgenden Fenstern bestehenden Kommunikationsrahmen (Frames) angeordnet. Innerhalb jedes TDMA-Kommunikationsrahmens sind außer den Datensequenzen auch Steuerimpulssequenzen (Synchronisationsbursts) vorgesehen. Dokument US 5278689 offenbart ein Verfahren zur optischen Datenübertragung, bei dem Datenpakete übertragen werden. Jedes Paket enthält einem Header mit niedriger Bitübertragungsrate und einen Datenabschnitt mit hoher Bitübertragungsrate.

Im einfachsten Fall besteht der TDMA-Kommunikationsrahmen aus einem zumindest einem zumindest einer Steuerimpulssequenz und zumindest einem Datenfenster. Meist beginnt der Rahmen nach einer einleitenden Steuersequenz mit einem Erkennungsfenster, welches den einzelnen Teilnehmern die Zuordnung eines Zeitfensters für deren private Kommunikation ermöglicht. Es kann sich ein Organisationsfenster anschließen, das den folgenden Zeitablauf im TDMA-Rahmen mittels eine sog. Frame Organization Table (FOT) beschreibt. Schließlich folgen ein oder mehrere Fenster für eine zumeist bidirektionale private Datenübertragung, die jeder Teilnehmer, beispielsweise in einer Master/Slave-Konfiguration, unabhängig von anderen Teilnehmern mit seinen speziellen Kommunikationsparametern nutzen kann. Jedes Fenster wird durch eine Steuerimpulssequenz eingeleitet. Auch innerhalb eines Fensters können Steuerimpulse auftreten.

Herkömmlicherweise werden sowohl Datenimpulssequenzen als auch Steuerimpulssequenzen mit einer vorgegebenen minimalen Bitübertragungsrate übertragen. Dies führt zu einer erheblichen Auslastung des für die Datenerfassung und Auswertung vorgesehenen Prozessors, da der Prozessor den eingehenden Datenstrom kontinuierlich auf das Auftreten von Steuerimpulssequenzen überprüfen muss. Außerdem ist es aufwendig, mehrere Datensequenzen von Kommunikationsteilnehmer, die mit unterschiedlichen Bitübertragungsraten und/oder unterschiedlichen Modulationsarten arbeiten, innerhalb eines einzelnen Kommunikationsrahmens zu integrieren.

Der vorliegenden Erfindung liegt daher das technische Problem zugrunde, ein Verfahren und eine Vorrichtung zur Übertragung von Daten über wenigstens eine optische Übertragungsstrecke bereit zu stellen, die den Prozessor bei der Auswertung des Datenstroms entlasten und die eine gleichzeitige Nutzung desselben Übertragungskanals durch unterschiedlich leistungsfähige Kommunikationsteilnehmer ermöglichen.

Gelöst wird dieses technische Problem durch das Verfahren gemäß vorliegendem Patentanspruch 1 und die Vorrichtung gemäß vorliegendem Anspruch 8. Vorteilhafte Weiterbildungen der Erfindung sind Gegenstände der abhängigen Ansprüche.

Gegenstand der vorliegenden Erfindung ist demnach zunächst ein Verfahren zum Übertragen von Daten über wenigstens eine optische Übertragungsstrecke, wobei man Datensequenzen über ein Zeitvielfachzugriffsprotokoll innerhalb von, aus einzelnen sequentiellen Fenstern bestehenden Kommunikationsrahmen mit einer vorgegebenen minimalen Bitübertragungsrate überträgt, und man innerhalb jedes Kommunikationsrahmens wenigstens eine Steuerimpulssequenz vorsieht, wobei das Verfahren dadurch gekennzeichnet ist, dass man die Steuerimpulssequenz mit einer Bitübertragungsrate überträgt, die niedriger als die minimale Bitübertragungsrate der Datensequenzen ist.

Mit dem erfindungsgemäßen Verfahren ist es möglich, die Erkennung von Steuerimpulssequenzen hardwaretechnisch zu implementieren, beispielsweise durch eine Gatterschaltung, so dass der Prozessor entlastest wird und in erster Linie für die Datenauswertung und -weiterverarbeitung zur Verfügung steht.

Vorteilhaft überträgt man die Steuerimpulssequenz mit einer Bitübertragungsrate, die weniger als 80%, vorzugsweise weniger als 65% der minimalen Bitübertragungsrate der Datensequenzen beträgt. Besonders bevorzugt überträgt man die Steuerimpulssequenz mit einer Bitübertragungsrate, die etwa 50% der minimalen Bitübertragungsrate der Datensequenzen beträgt.

Innerhalb eines Kommunikationsrahmens können unterschiedliche Steuerimpulssequenzen vorkommen, die vorzugsweise durch unterschiedliche Längen, d.h. durch eine unterschiedliche Gesamtdauer, charakterisiert sind.

Jeder Kommunikationsrahmen umfasst vorteilhaft eine Steuerimpulssequenz zur Rahmensynchronisation. Dies ist besonders dann bevorzugt, wenn im Laufe der Zeit verschiedene, insbesondere neu hinzukommende Teilnehmer Daten übertragen wollen. In einem Übertragungssystem, das nur aus zwei festen Teilnehmern besteht kann eine Rahmensynchronisation auch nur einmalig beim ersten Verbindungsaufbau bzw. bei jedem neuen Verbindungsaufbau durchgeführt werden. Nachfolgende Kommunikationsrahmen benötigen dann keine einleitende Synchronisation.

Neben der Rahmensynchronisation sind vorzugsweise auch Steuerimpulssequenzen zur Fenstersynchronisation und sogenannte "Commando Alerts", d.h. Steuerimpulssequenzen zum Einleiten von Kommandos, vorgesehen. Bevorzugt weisen die Steuerimpulssequenzen eine hierarchische Struktur auf, so dass eine übergeordnete Steuerimpulssequenz eine untergeordnete Steuerimpulssequenz umfasst. So ist vorzugsweise eine Rahmensynchronisationssequenz so ausgebildet, dass sie auch eine Fenstersynchronisationssequenz und die "Commando Alert"-Sequenz umfasst, während die Fenstersynchronisationssequenz zumindest die "Commando Alert"-Sequenz umfasst.

Als optische Übertragungsstrecke wird besonders bevorzugt eine Infrarotübertragungsstrecke verwendet, die vorteilhaft bei einer oder mehren standardisierten Wellenlängen, beispielsweise bei 850 nm, arbeitet.

Ein besonderer Vorteil des erfindungsgemäßen Verfahrens ist darin zusehen, dass die in den sequentiellen Fenstern übertragenen Daten unterschiedliche Bitübertragungsraten und/oder unterschiedliche Modulationsarten aufweisen können.

Gegenstand der vorliegenden Erfindung ist außerdem eine Vorrichtung zum Übertragen von Daten über wenigstens eine optische Übertragungsstrecke. Die erfindungsgemäße Vorrichtung umfasst wenigstens zwei Teilnehmer, wobei jeder Teilnehmer elektrooptische Datenübertragungsmittel mit Mitteln zur Erzeugung von Datensequenzen und Steuerimpulssequenzen und Auswertemittel mit zumindest einem Prozessor zur Datenverarbeitung aufweist. Die erfindungsgemäße Vorrichtung ist dadurch gekennzeichnet, dass die Mittel zur Erzeugung von Datensequenzen und Steuerimpulssequenzen so ausgebildet sind, das die Steuerimpulssequenzen mit einer niedrigeren Bitübertragungsrate als die Datensequenzen erzeugt werden, und dass die Datenübertragungsmittel außerdem Mittel zur Detektion von Steuerimpulssequenzen aufweisen.

Ein besonderer Vorteil des erfindungsgemäßen Verfahrens liegt in seiner einfachen Hardware-Implementierung. Die Mittel zur Detektion von Steuerimpulssequenzen können beispielsweise als einfache Gatterschaltung ausgebildet sein. Das Gatter ist so geschaltet, dass, wenn am Gatter eine Steuerimpulssequenz mit niedriger Bitübertragungsrate detektiert wird, ein Interrupt zum Prozessor gesendet wird. Der weitaus größte Teil der Prozessorleistung eines Teilnehmers steht daher, wie oben bereits erwähnt, für die Datenauswertung zur Verfügung, da eine kontinuierliche Überwachung des Datenstroms auf das Auftreten von Steuerimpulssequenzen durch den Prozessor nicht erforderlich ist. Der Prozessor muss lediglich nach Eintreffen eines Interrupts seine momentane Datenverarbeitung unterbrechen, um die im Datenstrom eintreffende Kommandosequenz abzuarbeiten.

Vorzugsweise umfassen die Datenübertragungsmittel der erfindungsgemäßen Vorrichtung zumindest einen Infrarotsender, beispielsweise eine IR-Diode oder einen IR-Laser, und zumindest einen Infrarotempfänger, beispielsweise eine IRempfindliche Photodiode.

Die vorliegende Erfindung ermöglicht außerdem, dass Kommunikationsteilnehmer mit unterschiedlicher Übertragungsrate und unterschiedlichen Modulationsarten Daten innerhalb des selben Kommunikationsrahmens übertragen können. So können beispielsweise mit 1 Megabit und 100 Megabit arbeitende Teilnehmer unabhängig und ungestört voneinander Fenster zur privaten Datenübertragung innerhalb des gleichen Kommunikationsrahmens nützen.

Die Erfindung wird im folgenden anhand eines in den beigefügten Zeichnungen dargestellten bevorzugten Ausführungsbeispiels näher erläutert.

In den Zeichnungen zeigen:
- Fig. 1: ein schematisch dargestelltes erfindungsgemäßes Übertragungssystem mit drei Teilnehmern;
- Fig. 2: einen im erfindungsgemäßen Verfahren benutzen Kommunikationsrahmen zur Datenübertragung; und
- Fig. 3: typische in dem Kommunikationsrahmen der Fig. 2 genutzte Steuerimpulssequenzen.

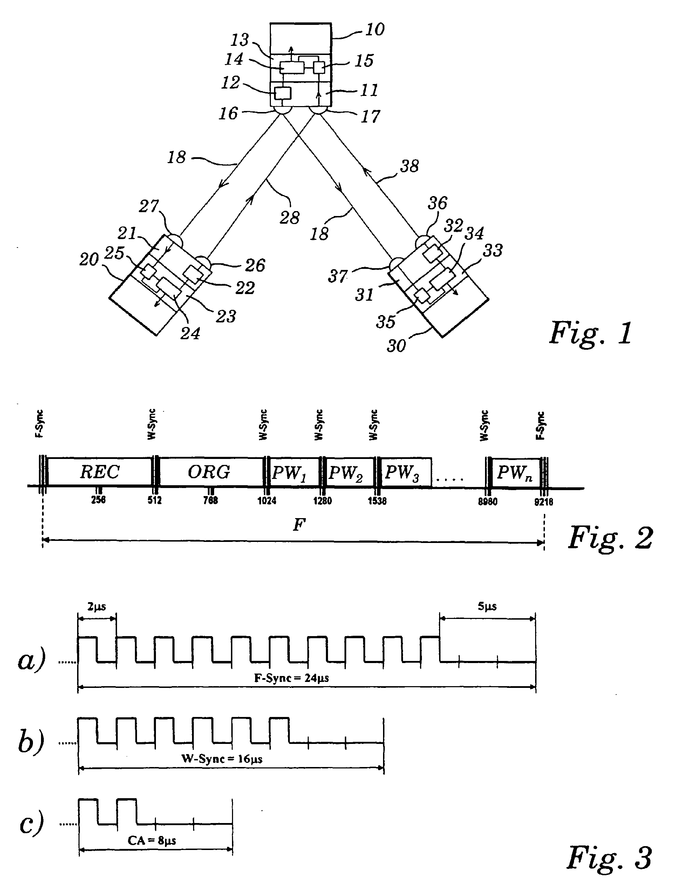

Bezugnehmend auf Figur 1 erkennt man ein aus drei Teilnehmern 10, 20, 30 bestehendes Infrarotübertragungssystem. Jeder Teilnehmer 10, 20, 30 weist elektrooptische Datenübertragungsmittel 11,21,31 und Auswertmittel 13,23,33 auf. Die Datenübertragungsmittel umfassen Impulsgeneratoren 12,22,23 zur Erzeugung von Datenimpulssequenzen und Steuerimpulssequenzen wie sie in den Figuren 2 und 3 detaillierter dargestellt sind. Dabei werden Steuerimpulssequenzen mit einer niedrigeren Bitübertragungsrate als die Datensequenzen erzeugt. Die so erzeugten Sequenzen werden über Infrarotsender 16,26,28 als Infrarotlichtimpulse 18,28,38 abgestrahlt und von den jeweils gegenüberliegenden Teilnehmern über Infrarotempfänger 17,27,37 detektiert. Die von den Infrarotempfängern 17,27,37 in elektrische Signale umgewandelten Daten werden über eine Gatterschaltung 15,25,35 zu einem Prozessor 14,24,35 der Auswerteeinrichtung 13,23,33 geleitet und von dort zu weiteren, lediglich jeweils durch einen Pfeil symbolisierte (nicht dargestellte) Speicher- oder Anzeigeeinrichtungen geleitet.

Der auf der Infrarotübertragungsstrecke gesendete digitalisierte Datenstrom wird in aufeinerderfolgende TDMA-Kommunikationsrahmen F unterteilt. In Figur 2 ist ein typischer bei dem erfindungsgemäßen Verfahren verwendbarer Rahmen F schematisch dargestellt. Der TDMA-Kommunikationsrahmen F besteht aus einem Erkennungsfenster REC, für den Verbindungsaufbau und die Synchronisation zwischen verschiedenen Teilnehmern. In dem anschließenden Organisationsfenster ORG wird der folgenden Zeitablauf und die Zuordnung der sich anschließenden Fenster PWₙ für die private Datenübertragung der einzelnen Teilnehmern mittels eines sog. Frame Organization Table FOT festgelegt. In den Datenübertragungsfenster PWₙ findet eine zumeist bidirektionale private Datenübertragung statt, die jeder Teilnehmer, beispielsweise in einer Master/Slave-oder einer Peer-to-Peer-Konfiguration, unabhängig von anderen Teilnehmern mit seinen speziellen Kommunikationsparametern nutzen kann. Jedes Fenster wird durch eine Steuerimpulssequenz eingeleitet. Jedes Datenfenster REC ORG oder PWₙ besteht aus einer Anzahl Zeitinkrementen von jeweils 256 µs Dauer zusammengesetzt, wobei die maximale Rahmenlänge im Beispiel 65,28 ms beträgt, was maximal 256 einzelnen Fensterinkrementen entspricht.

Ein wesentlicher Gesichtspunkt der Erfindung besteht darin, dass die Bitübertragungsrate der Datensequenzen in den Datenfenstern REC, ORG und PWₙ mit einer möglichst hohen, dem jeweiligen Teilnehmer möglichen Übertragungsrate erfolgt, die gleich oder größer als eine vorgegebenen minimalen Bitübertragungsrate f₁ von beispielsweise 1 MHz ist und daher für leistungsstarke Teilnehmer auch beispielsweise 10 oder 100 MHz betragen kann. Unterschiedlich leistungsstarke Teilnehmer können innerhalb desselben Rahmens F senden und empfangen. Beispielsweise kann ein Teilnehmer in seinem ihm zugeordneten privaten Datenfenster PW₁ eine in einer bestimmten Weise modulierte 100 MHz-Datensequenz senden und empfangen, während ein anderer Teilnehmer in seinem ihm zugeordneten privaten Datenfenster PW₂ lediglich mit einer Übertragungsrate von 1 MHz sendet und/oder empfängt.

Die Steuerimpulssequenzen werden dagegen mit einer niedrigeren Bitübertragungsrate f₂ übertragen. Typische Beispiele von unmodulierten Steuerimpulssequenzen sind in Figur 3 dargestellt. Jede Steuerimpulssequenz weist im dargestellten Beispiel eine Übertragungsrate f₂ von 500 kHz bei einem Duty Cycle von 0,5 auf und wird durch eine Auszeit von 5 µs abgeschlossen. Die Übertragungsrate der Steuerimpulssequenzen liegt also bei 50% der Datenübertragungsrate. Die drei dargestellten Steuerimpulssequenzen unterscheiden sich durch unterschiedliche Länge (Gesamtdauer) voneinander. Die Fig. 3 a) dargestellte einleitende Steuerimpulssequenz zur Synchronisation des Kommunikationsrahmens F-Sync besitzt beispielsweise eine Gesamtdauer von 24 µs, während die innerhalb des Kommunikationsrahmens zur Synchronisation der einzelnen Fenster verwendete und in Fig. 3 b) dargestellte Steuerimpulssequenz W-Sync eine Gesamtdauer von 16 µs besitzt. Innerhalb jedes Fensters (also REC, ORG und PWₙ in Fig. 2) können kurze (im Beispiel 8 µs lange) Steuerimpulssequenzen CA auftreten, wie sie in Fig. 3 c) dargestellt sind, die dem System anzeigen, dass das nachfolgende höherfrequente Datenbyte oder die nachfolgenden beiden Datenbytes als Kommando zu interpretieren sind, und die daher auch als Commando-Alerts bezeichnet werden.

Man erkennt, dass die Struktur der drei Steuerimpulssequenzen hierarchisch gewählt ist, so dass ein F-Sync immer auch einen W-Sync und einen CA umfasst, d.h. ein F-Sync leitet ein neuer Fenster ein und das erste Datenbyte (bzw. die ersten beiden Datenbytes) werden als Kommandos interpretiert.

Das erfindungsgemäße Rahmen- und Fenstersynchronisationsschema kann in unterschiedlichen drahtlosen IR-Kommunikationssystemen eingesetzt werden. Besonders geeignet ist es allerdings für eine Implementierung in Systeme zur Transportinformation und Transportkontrolle, beispielsweise in Systemen zur drahtlosen Erfassung von Straßennutzungsgebühren (Mautgebühren). Beispielsweise lässt sich das erfindungsgemäß Synchronisationsverfahren im Rahmen des geplanten Standards "Communication air interface at long and medium range" (CALM-IR, ISO/AWI 21214) implementieren, der Spezifikationen für Master/Slave- und Peer to Peer-Infrarotdatenübertragung bei 850 nm spezifiziert.

## Patentansprüche

1. Verfahren zum Übertragen von Daten über wenigstens eine optische Übertragungsstrecke, wobei man
die Datensequenzen über ein Zeitvielfachzugriffsprotokoll innerhalb von, aus einzelnen sequentiellen Fenstern (REC,ORG,PW) bestehenden Kommunikationsrahmen (F) mit einer vorgegebenen minimalen Bitübertragungsrate (f₁) überträgt,
innerhalb jedes Kommunikationsrahmens (F) wenigstens eine Steuerimpulssequenz (F-Sync, W-Sync, CA) vorsieht, wobei man die Steuerimpulssequenz (F-Sync, W-Sync, CA) mit einer Bitübertragungsrate (f₂) überträgt, die niedriger als die minimale Bitübertragungsrate (f₁) der Datensequenzen ist,
und man Steuersequenzen erkennt und die Verarbeitung der Datensequenzen in Abhängigkeit von den erkannten Steuersequenzen steuert.

2. Verfahren gemäß Anspruch 1, **dadurch gekennzeichnet, dass** man die Steuerimpulssequenz (F-Sync, W-Sync, CA) mit einer Bitübertragungsrate (f₂) überträgt, die weniger als 80%, vorzugsweise weniger als 65% der minimalen Bitübertragungsrate (f₁) der Datensequenzen beträgt.

3. Verfahren gemäß Anspruch 2, **dadurch gekennzeichnet, dass** man die Steuerimpulssequenz (F-Sync, W-Sync, CA) mit einer Bitübertragungsrate (f₂) überträgt, die etwa 50% der minimalen Bitübertragungsrate (f₁) der Datensequenzen beträgt.

4. Verfahren gemäß einem der Ansprüche 1 bis 3, **dadurch gekennzeichnet, dass** unterschiedliche Steuerimpulssequenzen (Sync) durch unterschiedliche Längen charakterisiert sind.

5. Verfahren gemäß einem der Ansprüche 1 bis 3, **dadurch gekennzeichnet, dass** der Kommunikationsrahmen (F) eine Steuerimpulssequenz (F-Sync) zur Rahmensynchronisation umfasst.

6. Verfahren gemäß einem der Ansprüche 1 bis 5, **dadurch gekennzeichnet, dass** die optische Übertragungsstrecke eine Infrarotübertragungsstrecke (IR) ist.

7. Verfahren gemäß einem der Ansprüche 1 bis 6, **dadurch gekennzeichnet, dass** die in den sequentiellen Fenstern (REC,ORG,PW) übertragenen Datensequenzen unterschiedliche Bitübertragungsraten und/oder unterschiedliche Modulationsarten aufweisen können.

8. Vorrichtung zum Übertragen von Daten über wenigstens eine optische Übertragungsstrecke mit wenigstens zwei Teilnehmern (10, 20), wobei jeder Teilnehmer (10, 20) elektrooptische Datenübertragungsmittel (11,21 mit Mitteln (12,22) zur Erzeugung von Datensequenzen und Steuerimpulssequenzen und Auswertemittel (13,23) mit zumindest einem Prozessor (14,24) zur Datenverarbeitung aufweist,
**dadurch gekennzeichnet, dass**
die Mittel (12,22) zur Erzeugung von Datensequenzen und Steuerimpulssequenzen so ausgebildet sind, das die Steuerimpulssequenzen mit einer niedrigeren Bitübertragungsrate als die Datensequenzen erzeugt werden, und
die Auswertemittel (13,23) außerdem dem Prozessor (14,24) vorgeschaltete Mittel (15,25) zur Detektion von Steuerimpulssequenzen aufweisen.

9. Vorrichtung gemäß Anspruch 8, **dadurch gekennzeichnet, dass** die Datenübertragungsmittel (11,21) zumindest einen Infrarotsender (16,26) und zumindest einen Infrarotempfänger (17,27) umfassen.

10. Vorrichtung gemäß einem der Ansprüche 8 oder 9, **dadurch gekennzeichnet, dass** die von den Teilnehmer (10,20) übertragenen Datensequenzen unterschiedliche Bitübertragungsraten und/oder unterschiedliche Modulationsarten aufweisen.

## Claims

1. A method for transmitting data over at least one optical transmission route, wherein
the data sequences are transmitted via a time division multiple access protocol, inside communication frames (F) that comprise individual sequential windows (REC, ORG, PW), at a predetermined minimal bit transmission rate (f₁),
within each communication frame (F), at least one control pulse sequence (F-Sync, W-Sync, CA) is provided, and the control pulse sequence (F-Sync, W-Sync, CA) is transmitted at a bit transmission rate (f₂) that is lower than the minimal bit transmission rate (f₁) of the data sequences,
and control sequences are detected and the processing of the data sequences is controlled as a function of the control sequences detected.

2. The method of claim 1, **characterized in that** the control pulse sequence (F-Sync, W-Sync, CA) is transmitted at a bit transmission rate (f₂) that is less than 80% and preferably less than 65% of the minimal bit transmission rate (f₁) of the data sequences.

3. The method of claim 2, **characterized in that** the control pulse sequence (F-Sync, W-Sync, CA) is transmitted at a bit transmission rate (f₂) that is approximately 50% of the minimal bit transmission rate (f₁) of the data sequences.

4. The method of one of claims 1 through 3, **characterized in that** different control pulse sequences (Sync) are **characterized by** different lengths.

5. The method of one of claims 1 through 3, **characterized in that** the communication frame (F) includes a control pulse sequence (F-Sync) for frame synchronization.

6. The method of one of claims 1 through 5, **characterized in that** the optical transmission route is an infrared transmission route (IR).

7. The method of one of claims 1 through 6, **characterized in that** the data sequences transmitted in the sequential windows (REC, ORG, PW) may have different bit transmission rates and/or different types of modulation.

8. A device for transmitting data over at least one optical transmission route, having at least two participants (10, 20), wherein each participant (10, 20) has electrooptical data transmission means (11, 21), with means (12, 22) for generating data sequences and control pulse sequences, and evaluation means (13, 23), having at least one processor (14, 24) for data processing,
**characterized in that**
the means (12, 22) for generating data sequences and control pulse sequences are embodied such that the control pulse sequences are generated at a lower bit transmission rate than the data sequences; and
the evaluation means (13, 23) furthermore have means (15, 25), preceding the processor (14, 24), for detecting control pulse sequences.

9. The device of claim 8, **characterized in that** the data transmission means (11, 21) include at least one infrared transmitter (16, 26) and at least one infrared receiver (17, 27).

10. The device of one of claims 8 or 9, **characterized in that** the data sequences transmitted by the participant (10, 20) have different bit transmission rates and/or different types of modulation.

## Revendications

1. Procédé de transmission de données sur au moins un trajet de transmission optique, selon lequel
on transmet les séquences de données à un débit de transmission binaire minimal prédéfini (f₁) à partir d'une trame de communication (F) constituée de différentes fenêtres séquentielles (REC, ORG, PW) par l'intermédiaire d'un protocole d'accès multiple dans le temps,
on prévoit, à l'intérieur de chaque trame de communication (F) au moins une séquence d'impulsion de commande (F-Sync, W-Sync, CA), en transmettant celle-ci à un débit de transmission binaire (f₂) inférieur au débit de transmission binaire minimal (f₁) des séquences de données
et on reconnaît des séquences de commande et on commande le traitement des séquences de données en fonction des séquences de commande reconnues.

2. Procédé selon la revendication 1, **caractérisé en ce qu'**on transmet la séquence d'impulsions de commande (F-Sync, W-Sync, CA) à un débit de transmission binaire (f₂) inférieur à 80 %, de préférence inférieur à 65 % du débit binaire de transmission minimal (f₁) des séquences de données.

3. Procédé selon la revendication 2, **caractérisé en ce qu'**on transmet la séquence d'impulsions de commande (F-Sync, W-Sync, CA) à un débit de transmission binaire (f₂) égal à environ 50 % du débit binaire de transmission minimal (f₁) des séquences de données.

4. Procédé selon l'une quelconque des revendications 1 à 3, **caractérisé en ce que** des séquences d'impulsions de commande différentes (Sync) sont **caractérisées par** des longueurs différentes.

5. Procédé selon l'une quelconque des revendications 1 à 3, **caractérisé en ce que** la trame de communication (F) renferme une séquence d'impulsions de commande (F-Sync) pour synchroniser la trame.

6. Procédé selon l'une quelconque des revendications 1 à 5, **caractérisé en ce que** le trajet de transmission optique est un trajet de transmission infrarouge (IF).

7. Procédé selon l'une quelconque des revendications 1 à 6, **caractérisé en ce que** les séquences de données transmises dans les fenêtres séquentielles (REC, ORG, PW) peuvent présenter des débits de transmission binaires différents et/ou des types de modulation différents.

8. Dispositif de transmission de données par l'intermédiaire d'au moins un trajet de transmission optique comportant au moins deux abonnés (10, 20), chaque abonné (10, 20) présentant des moyens électrooptiques de transmission de données (11, 21) avec des moyens (12, 22) pour produire des séquences de données et des séquences d'impulsions de commande et des moyens d'analyse (13, 23) avec au moins un processeur (14, 24) pour traiter les données,
**caractérisé en ce que**
les moyens (12, 22) pour produire des séquences de données et des séquences d'impulsions de commande sont conçus de manière à ce que les séquences d'impulsions de commande soient produites à un débit de transmission binaire plus bas que les séquences de données et
les moyens d'analyse (13, 23) présentent en outre des moyens (15, 25) de détection de séquences d'impulsions de commande situés avant le processeur (14, 24).

9. Dispositif selon la revendication 8, **caractérisé en ce que** les moyens de transmission de données (11, 21) comprennent au moins un émetteur infrarouge (16, 26) et au moins un récepteur infrarouge (17, 27).

10. Dispositif selon l'une quelconque des revendications 8 ou 9, **caractérisé en ce que** les séquences de données transmises par les abonnés (10, 20) présentent des débits de transmission binaires différents et/ou des types de modulation différents.
